**Europäisches Patentamt**

**European Patent Office**

**Office européen des brevets**

(19)

(11) Veröffentlichungsnummer: **0 123 761**
A1

## (12) EUROPÄISCHE PATENTANMELDUNG

(21) Anmeldenummer: 83730059.9

(22) Anmeldetag: 28.06.83

(51) Int. Cl.³: **F 16 L 13/00, F 16 L 21/00**

(30) Priorität: 03.05.83 DE 3316503

(43) Veröffentlichungstag der Anmeldung: 07.11.84
Patentblatt 84/45

(84) Benannte Vertragsstaaten: **AT BE CH DE FR GB IT LI LU NL SE**

(71) Anmelder: **Dannex Sanitär Warenhandels GmbH, Bunsenstrasse 6d, D-3013 Barsinghausen (DE)**

(72) Erfinder: **Dannenbaum, Bernd, Friedensplatz 14, D-3013 Barsinghausen 1 (DE)**

(74) Vertreter: **Thömen, Uwe, Dipl.-Ing., Patentanwalt U. Thömen Zeppelinstrasse 5, D-3000 Hannover (DE)**

(54) **Anschlussstück für Kunststoffrohre.**

(57) Im sanitären Bereich und bei Wasserleitungen werden vielfach Anschlußstücke benötigt, die mit dem Ende eines Kunststoffrohres verbunden werden müssen, beispielsweise um eine Armatur anschrauben zu können. Bei den bekannten Anschlußstücken erfolgt die Verbindung über eine Quetschverschraubung, wobei das Rohrende zusammengedrückt bzw. eingequetscht wird. Die Quetschverschraubungen sind jedoch als nachteilig anzusehen, da sie den Wasserdurchfluß an der Verbindungsstelle behindern können. Außerdem sind sie teuer und meist nur von Fachleuten zu beherrschen.

Hier schafft die Erfindung dadurch Abhilfe, daß das Anschlußstück eine Aufnahmebohrung (12) zum Einführen eines Kunststoffrohrendes besitzt, wobei das Querschnittsprofil der Aufnahmebohrung (12) sägezahnförmig (14, 16, 18) ausgebildet ist, so daß im Bereich der Innenwandung umlaufende Spitzen (14) bzw. Kanten entstehen, die sich in die Außenhaut der Rohrwandung (20) des eingeführten Rohrendes einschneiden. Das sägezahnförmige Profil ermöglicht es, ein Rohrende unter geringem Kraftaufwand in die Aufnahmebohrung (12) einzuführen; allerdings ist es unmöglich, das Rohrende wieder aus der Aufnahmebohrung (12) zu entfernen, so daß eine unlösbare und dichte Verbindung geschaffen wird.

EP 0 123 761 A1

Anschlußstück für Kunststoffrohre

Die Erfindung betrifft ein Anschlußstück für Kunststoffrohre, insbesondere für PE-Rohre und VPE-Rohre, mit mindestens einer rohrförmigen Aufnahmebohrung, in welche
ein Rohrende einführbar ist.

In vielen Bereichen der Technik besteht häufig die Notwendigkeit, an einem Rohrende ein Anschlußstück zu befestigen bzw. anzuschließen. Vordringlich ist dieses
Problem vor allem auch im Bereich der Sanitär-Technik
und bei Wasserleitungen.

Hier sind die Anschlußstücke beispielsweise erforderlich,
um an die Wasserleitung eine Armatur anschließen zu können
oder - unter Verwendung eines Winkelstücks - um die Richtung der meist starren Wasserleitung verändern zu können.

Als Rohre für die Wasserleitungen sind schon Kupferrohre
verwendet worden, die sich in der Praxis jedoch als nachteilig erwiesen haben. Die Kupferrohre neigen dazu, leicht
zu "schwitzen", wenn das durchfließende Wasser unterschiedliche Temperaturen besitzt. Es war daher bei der Verwendung
von Kupferrohren eine aufwendige Isolierung erforderlich.

Auch im Hinblick auf die benötigten Anschlußstücke hat
sich die Verwendung von Kupferrohren als nachteilig erwiesen. Die Anschlußstücke mußten nämlich angelötet werden,
was relativ aufwendig ist. Häufig waren die Lötverbindungen
auch nicht dicht, und zudem gestalten sich die Reparaturarbeiten sehr schwierig.

0123761

Man ist deshalb schon in zunehmendem Maße dazu übergegangen, Kunststoffrohre, und hier vor allem die sogenannten PE-Rohre, zu verwenden. Trotz der erheblichen Vorteile gegenüber den Kupferrohren ist allerdings auch bei den Kunststoffrohren bisher das Problem nicht befriedigend gelöst worden, Anschlußstücke an den Enden der Kunststoffrohre zu befestigen.

Üblicherweise werden Anschlußstücke verwendet, bei denen die Verbindung zwischen dem Anschlußstück und dem Rohrende mit Hilfe einer sogenannten Quetschverschraubung hergestellt wird. Dabei handelt es sich um eine Verschraubung, bei welcher das Rohrende konusartig zusammengedrückt bzw. eingequetscht wird.

Die Montage mit Hilfe der Quetschverschraubung hat sich in der Praxis bisher immer als recht schwierig erwiesen. Es ist daher in aller Regel erforderlich, einen Fachmann hinzuzuziehen, da ein Heimwerker Mühe hat, das Anschlußstück fachgerecht anzubringen.

Als nachteilig ist bei den bekannten Anschlußstücken mit Quetschverschraubung auch der Umstand anzusehen, daß der Wasserdurchfluß wegen des eingequetschten Rohrendes leicht behindert wird. Schließlich sind die bekannten Anschlußstücke auch relativ teuer.

Hier greift die Erfindung ein, der die Aufgabe zugrunde liegt, die beschriebenen Nachteile zu beseitigen und ein Anschlußstück für Kunststoffrohre zu schaffen, welches auf einfache Weise an einem Rohrende montiert werden kann und eine praktisch unlösbare und dichte Verbindung mit dem Rohrende eingeht.

Die Lösung dieser Aufgabe erfolgt bei dem im Oberbegriff des Anspruchs 1 vorausgesetzten Anschlußstück
dadurch, daß die Innenwandung der Aufnahmebohrung des
Anschlußstückes im Querschnittsprofil mit nach innen
gerichteten vorstehenden Spitzen versehen ist. Diese
werden vorzugsweise durch ein sägezahnförmiges Profil
mit einer langen ansteigenden Flanke und einer kurzen
abfallenden Flanke gebildet.

Das sägezahnförmige Profil bzw. die dadurch gebildeten
Spitzen lassen sich recht einfach mit Hilfe eines Drehwerkzeuges bilden, mit welchem die Innenwandung der
Aufnahmebohrung entsprechend abgedreht wird. Im Gegensatz zu einem Gewinde entstehen so einzelne kreisförmig
umlaufende Spitzen bzw. Vorsprünge auf der Innenwandung.

Das durch die Erfindung geschaffene neuartige Anschlußstück gestattet auf einfache Weise die Verbindung mit
dem Ende eines Kunststoffrohres. Letzteres wird lediglich bis zu einem Anschlag in die Aufnahmebohrung eingesteckt, was bei den meisten üblichen Rohrdurchmessern
sogar von Hand erfolgen kann.

Infolge des sägezahnförmigen Profils der Innenwandung
ändert sich längs der Mittelachse der Aufnahmebohrung
auch jeweils der Durchmesser. Am geringsten ist der Durchmesser im Bereich der erwähnten Spitzen. Dieser geringste
Durchmesser wird vorteilhaft so gewählt, daß er etwas geringer als der Außendurchmesser des Rohrendes ist.

Das Rohrende muß also entgegen einem geringfügigem
Widerstand in die Aufnahmebohrung eingeführt werden.
Durch das sägezahnförmige Profil ist gewährleistet,
daß eine Bewegung des Rohrendes nur in einer Richtung
möglich ist, nämlich in die Richtung der ansteigenden
Flanke des sägezahnförmigen Profils. Die Spitzen schneiden sich dabei geringfügig in die Außenwandung des Rohres
ein, was zur Folge hat, daß das in die Aufnahmebohrung
eingeführte Rohr nicht in die entgegengesetzte Richtung
- in dem Sinne, daß das Rohr von dem Anschlußstück entfernt wird - bewegt werden kann.

Anhand von Versuchen ist festgestellt worden, daß die
eingeführten Rohrenden so fest innerhalb der Aufnahmebohrung gehalten sind, daß ein Entfernen des Rohres nur
möglich ist, indem das Rohrende außerhalb des Anschlußstückes abgesägt wird und anschließend das in der Aufnahmebohrung verbliebene Stück ausgebrannt wird.

Es hat sich gezeigt, daß es völlig ausreichend ist, lediglich drei oder vier Sägezähne bzw. Spitzen innerhalb der
Aufnahmebohrung vorzusehen. Schon bei nur einem einzigen
Sägezahn bzw. bei nur einer einzigen Spitze ist es normalerweise unmöglich, ein in die Aufnahmebohrung eingeführtes
Rohrende wieder zu entfernen.

Das neuartige Anschlußstück ist in der Fertigung und Herstellung recht einfach, was zu dem Vorteil führt, daß der
Preis für das Anschlußstück gering gehalten werden kann.
Da die eingangs erwähnte Quetschverschraubung nicht mehr
erforderlich ist, ergibt sich als weiterer Vorteil ein
ungehinderter Wasserdurchfluß auch im Bereich des Anschlußstückes. Schließlich ist die Handhabung des erfindungsgemäßen Anschlußstückes bzw. die Herstellung
der unlösbaren Verbindung mit einem Rohrende so einfach, daß sie ohne weiteres auch von einem Laien vorgenommen werden kann.

Gemäß einer zweckmäßigen Ausgestaltung der Erfindung
beginnt die erste ansteigende lange Flanke des sägezahnförmigen Profils unmittelbar am äußeren Ende des
Anschlußstückes. Hier ist der Innendurchmesser also
am größten, der sich dann in Richtung der Längsachse
der Aufnahmebohrung konisch bis zur ersten Spitze hin
verjüngt. Dadurch wird das Einführen eines Rohrendes
in die Aufnahmebohrung erleichtert.

Andere vorteilhafte Weiterbildungen und Ausgestaltungen
der Erfindung sind in den Unteransprüchen angegeben
und in der Zeichnung dargestellt.

Zum besseren Verständnis der Erfindung wird diese nachfolgend anhand der in der Zeichnung zu erkennenden Ausführungsformen näher erläutert. Es zeigen:

Fig. 1:     die Querschnittsansicht eines
            Teiles eines Anschlußstückes
            mit einer Aufnahmebohrung,

Fig. 2:     eine vergrößerte Teil-Darstellung des Anschlußstückes gemäß

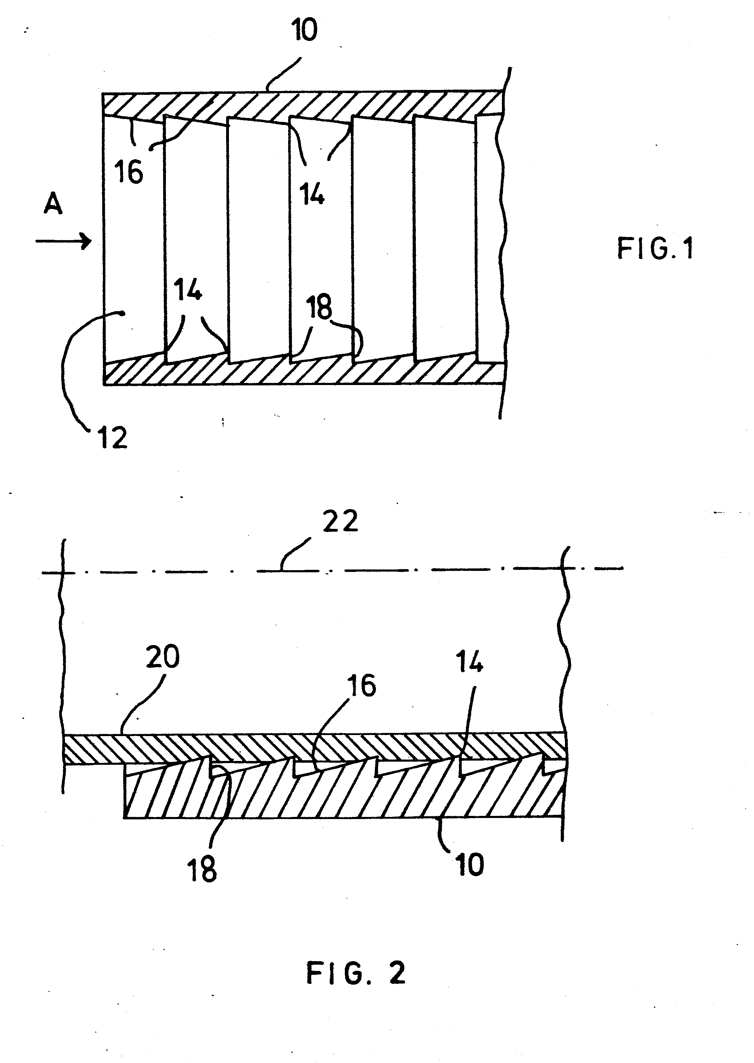

            Fig. 1, mit einem eingeführten
            Rohrende,

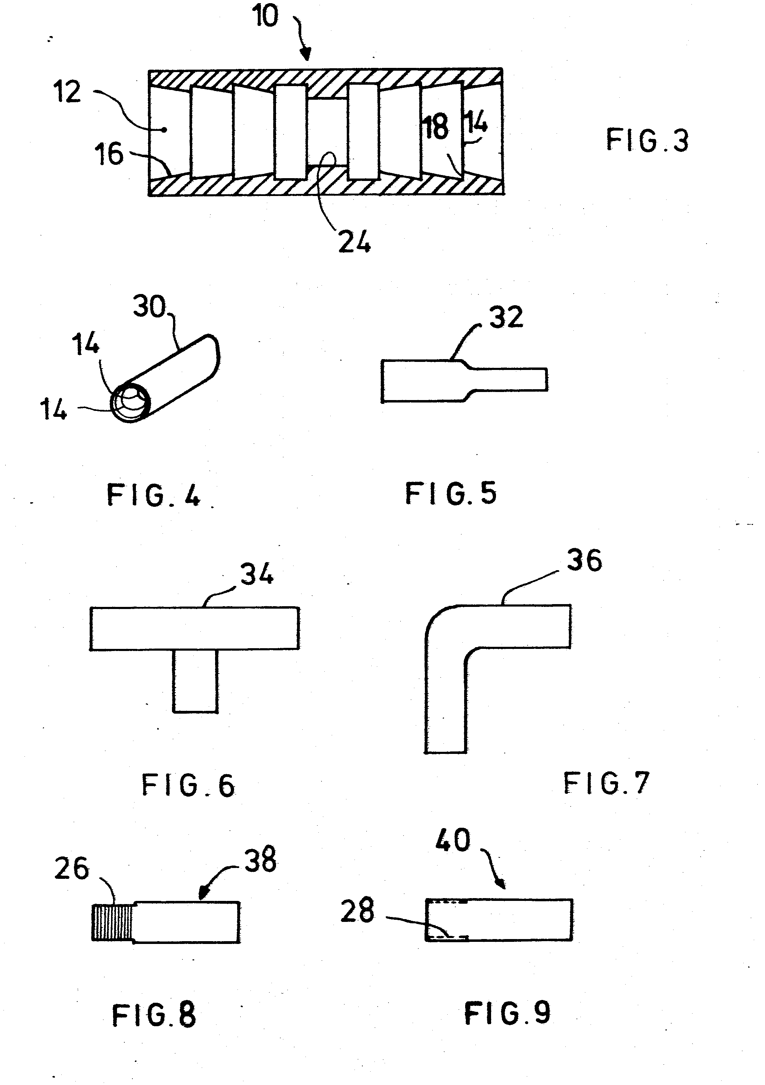

Fig. 3:     die Querschnittsansicht eines
            als Doppelmuffe ausgebildeten
            Anschlußstückes,

Fig. 4:      die perspektivische Ansicht
             einer anderen Ausführungsform eines Anschlußstückes,

Fig. 5—9:    weitere Ausführungsformen
             eines Anschlußstückes.

Das in Fig. 1 zeichnerisch in einer Querschnittsansicht
teilweise dargestellte Anschlußstück 10 besitzt eine
Aufnahmebohrung 12. Durch den Pfeil A ist angedeutet,
daß in dieser Richtung ein Rohr in die Aufnahmebohrung
12 eingeführt werden kann.

Das entscheidende Merkmal des Anschlußstückes 10 besteht darin, daß die Innenwandung der Aufnahmebohrung 12
nicht glatt, sondern im Querschnittsprofil sägezahnförmig
ausgebildet ist, wobei das Profil innerhalb der Aufnahmebohrung umläuft.

Das erwähnte sägezahnförmige Profil der Innenwandung der
Aufnahmebohrung 12 kann dadurch erzeugt werden, daß die
Innenwandung mit einem Drehstahl bearbeitet wird, so daß
die Querschnittsform durch Abdrehen entsteht.

Die Sägezahnform setzt sich aus jeweils einer ansteigenden
Flanke 16 und einer in radialer Richtung abfallenden
Flanke 18 zusammen. An den Übergangsstellen von der ansteigenden Flanke 16 zur abfallenden Flanke 18 entstehen
somit innerhalb der Aufnahmebohrung umlaufende Spitzen 14.

Die erste ansteigende Flanke 16 beginnt unmittelbar am
äußeren Ende des Anschlußstückes 10, und zwar in der Weise,
daß sich längs der ansteigenden Flanke 16 der Innendurchmesser konisch in Richtung des Pfeiles A - also in die Richtung, in welche ein Rohrende in die Aufnahmebohrung 12 eingeführt werden kann - verkleinert.

In der teilweisen Querschnittsansicht gemäß Fig. 2 ist ein in die Aufnahmebohrung 12 eingeführtes Rohrende mit einer Rohrwand 20 zu erkennen. Die zeichnerische Darstellung verdeutlicht, daß sich die umlaufenden Spitzen 14 etwas in die äußere Haut der Rohrwand 20 einschneiden. Als Rohre werden vorzugsweise PE-Rohre verwendet (Polyäthylen-Rohre); es lassen sich daneben auch VPE-Rohre vorsehen.

Da die relativ langen Flanken 16 in Richtung zur Längsachse 22 bzw. in Richtung des Pfeiles A ansteigen, läßt sich das Rohrende mit der Rohrwand 20 relativ leicht in die Aufnahmebohrung 12 einführen. Der Effekt des Einschneidens der Spitzen 14 in die Außenhaut der Rohrwand 20 kann dadurch unterstützt werden, daß das in die Aufnahmebohrung 12 eingeführte Rohrende mehrfach relativ zum Anschlußstück 10 gedreht wird (bzw. umgekehrt).

Durch die voranstehend beschriebene besondere Profilform der Innenwandung der Aufnahmebohrung 12 ist es zwar relativ einfach, das Ende eines PE-Rohres in die Aufnahmebohrung 12 einzuführen bzw. einzustecken, umgekehrt ist es praktisch unmöglich, das Rohrende wieder aus der Aufnahmebohrung 12 herauszuziehen. Es wird also eine unlösbare Verbindung zwischen dem Anschlußstück 10 und dem Rohrende hergestellt. Das sägezahnförmige Profil mit den Spitzen 14 läßt sich in seiner Wirkung in etwa mit dem Prinzip eines Widerhakens vergleichen.

Da sich die Spitzen 14 etwas in die Außenhaut der Rohrwand 20 einschneiden, ist die Verbindung nicht nur unlösbar sondern auch absolut wasserdicht. Ein bevorzugtes Anwendungsgebiet der Anschlußstücke liegt daher im sanitären Bereich bzw. auf dem Gebiet der Wasserleitungen.

Das erfindungsgemäße Prinzip, die Innenwand der Aufnahmebohrung 12 mit den Spitzen 14 auszustatten, läßt
sich bei allen üblichen und denkbaren Anschlußstücken
verwirklichen. In Fig. 3 ist in einer Querschnittsansicht beispielsweise ein Anschlußstück 10 dargestellt,
welches eine Doppelmuffe bildet. In diese Doppelmuffe
können von beiden Seiten her Rohrenden eines PE-Rohres
eingesteckt werden. In der Mitte der Aufnahmebohrung
12 befindet sich ein Ansatz 24, welcher einen Anschlag
für die eingeführten Rohrenden bildet.

Fig. 4 zeigt ein als Endstopfen 30 ausgebildetes Anschlußstück. In den Endstopfen 30 läßt sich von nur
einer Seite her ein Rohrende einführen, während der
Endstopfen 30 am anderen Ende abgeschlossen ist. Die
perspektivische Darstellung in Fig. 4 zeigt übrigens
deutlich die innerhalb der Aufnahmebohrung 12 umlaufenden
Spitzen 14 (von denen hier zwei zu erkennen sind).

Die Ausführungsform des Anschlußstückes gemäß Fig. 5
stellt ein Reduzierstück 32 dar, mit dessen Hilfe es
möglich ist, zwei Rohrenden unterschiedlichen Durchmessers miteinander über das Reduzierstück 32 zu verbinden. In das Reduzierstück 32 können also von beiden Seiten her Rohrenden in die Aufnahmebohrung eingeführt werden.

Häufig besteht der Wunsch, drei Rohrenden miteinander in Verbindung zu bringen bzw. eine Abzweigung von einer Leitung vorzusehen, und in solchen Fällen läßt sich vorteilhaft ein T-Stück 34 gemäß Fig. 6 verwenden. Alle drei von außen zugänglichen Aufnahmebohrungen sind gemäß der erfindungsgemäßen Idee mit dem sägezahnförmigen Profil innerhalb der Aufnahmebohrung ausgestattet.

Eine andere Ausführungsform eines Anschlußstückes ist in Fig. 7 dargestellt, welches ein Winkelstück 36 zeigt. Mit Hilfe eines solchen Winkelstückes kann die Richtung einer Wasserleitung oder dergleichen verändert werden.

Die bisher beschriebenen Ausführungsformen betreffen Anschlußstücke, welche ausschließlich mit dem Ende eines PE-Rohres oder eines VPE-Rohres verbunden werden sollen. Häufig besteht der Wunsch, über ein Anschlußstück, welches sich auf dem Ende eines Rohres befindet, eine Gewindeverbindung mit einer Armatur oder dergleichen herzustellen. In Ausführungsbeispielen in den Fig. 8 und 9 ist dargestellt, daß die Anschlußstücke 38 und 40 in solchen Fällen an einem Ende mit einem Außengewinde 26 (Fig. 8) oder auch mit einem Innengewinde 28 (Fig. 9) versehen werden können. Das jeweils andere Ende besitzt dann die Aufnahmebohrung 12, dessen Innenwandung in der beschriebenen Art mit den Spitzen 14 ausgestattet ist.

Das erfindungsgemäße ausgebildete Anschlußstück 10 besteht vorteilhafterweise aus Messing mit einem geringen Kupferzusatz. Es eignet sich insbesondere zur Anwendung bei Kunststoffrohren.

Die Handhabung des neuartigen Anschlußstückes 10 bzw. das Einführen eines Rohrendes gestaltet sich sehr einfach, so daß das neuartige Anschlußstück 10 sich vorteilhaft auch für den Nicht-Fachmann bzw. für den Hobby-Markt eignet.

Dannex Sanitär

Warenhandels GmbH                           380/2 EU

P a t e n t a n s p r ü c h e
---------------------------------

1.    Anschlußstück für Kunststoffrohre, insbesondere
für PE-Rohre und VPE-Rohre, mit mindestens einer rohrförmigen Aufnahmebohrung, in welche ein Rohrende einführbar ist, dadurch gekennzeichnet, daß die Innenwandung
der Aufnahmebohrung (12) im Querschnittsprofil mit nach
innen gerichteten vorstehenden Spitzen (14) versehen ist.

2.    Anschlußstück nach Anspruch 1, dadurch gekennzeichnet, daß die Spitzen (14) dadurch gebildet sind, daß
die Innenwandung der Aufnahmebohrung (10) im Querschnittsprofil sägezahnförmig mit einer langen ansteigenden Flanke
(16) und einer kurzen abfallenden Flanke (18) ausgebildet
ist.

3.    Anschlußstück nach Anspruch 2, dadurch gekennzeichnet, daß die erste ansteigende Flanke (16) am äußeren
Ende der Aufnahmebohrung (12) beginnt und in der vom Ende
wegweisenden Richtung nach innen hin ansteigt.

4.    Anschlußstück nach einem der vorhergehenden Ansprüche 2 und/oder 3, dadurch gekennzeichnet, daß die
abfallende Flanke (18) senkrecht zur Längsachse (22)
der Aufnahmebohrung (12) verläuft.

5.    Anschlußstück nach einem der vorhergehenden Ansprüche 1 - 4, dadurch gekennzeichnet, daß die Spitzen
(14) bzw. das sägezahnförmige Profil (14,16,18) durch
Abdrehen der Innenwandung der Aufnahmebohrung (12) mit
einem Drehwerkzeug hergestellt sind, so daß die nach
innen gerichteten Spitzen (14) auf der Innenwandung der
Aufnahmebohrung (12) umlaufende Ringe bilden.

6.    Anschlußstück nach einem der vorhergehenden Ansprüche 1 - 5, dadurch gekennzeichnet, daß das Anschlußstück (10) aus Messing besteht.

7.    Anschlußstück nach einem der vorhergehenden Ansprüche 1 - 6, dadurch gekennzeichnet, daß das Anschlußstück (10) neben der Aufnahmebohrung (12) eine Gewindebohrung zum Anschrauben einer Armatur oder dergleichen
besitzt.

8.    Anschlußstück nach Anspruch 7, dadurch gekennzeichnet, daß die Aufnahmebohrung (12) und die Gewindebohrung miteinander fluchten und durch einen ringförmigen
nach innen gerichteten Ansatz (24) voneinander getrennt
sind.

9.    Anschlußstück nach einem der vorhergehenden Ansprüche 7 oder 8, dadurch gekennzeichnet, daß die Gewindebohrung ein Innengewinde (28) besitzt.

10.     Anschlußstück nach einem der vorhergehenden Ansprüche 7 oder 8, dadurch gekennzeichnet, daß das Anschlußstück (10) an seinem einen Ende mit einem Außengewinde (26) versehen ist.

FIG.1

FIG. 2

FIG.3

FIG.4

FIG.5

FIG.6

FIG.7

FIG.8

FIG.9

**Europäisches Patentamt**

**EUROPÄISCHER RECHERCHENBERICHT**  0123761

Nummer der Anmeldung

EP 83730059.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US - A - 4 059 294 (FALCONE)  <br> * Gesamt * <br> -- | 1,2,4 | F 16 L 13/00 <br> F 16 L 21/00 |
| A | AT - B - 328 809 (RAYCHEM CORP.) <br> * Gesamt * <br> -- | 1,2,3,4 | |
| A | DE - A1 - 2 737 136 (RACI S.P.A.) <br> ---- | | |

| RECHERCHIERTE SACHGEBIETE (Int. Cl. ³) |
|---|
| F 16 L 13/00 |
| F 16 L 21/00 |
| F 16 L 25/00 |
| F 16 L 41/00 |
| F 16 L 47/00 |

Der vorliegende Recherchenbericht wurde für alle Patentansprüche erstellt.

| Recherchenort | Abschlußdatum der Recherche | Prüfer |
|---|---|---|
| WIEN | 16-07-1984 | SCHUGANICH |